# EUROPÄISCHE PATENTSCHRIFT

(11) **EP 2 821 132 B1**
(45) Veröffentlichungstag und Bekanntmachung des Hinweises auf die Patenterteilung: **17.02.2016**
(21) Anmeldenummer: 14170334.8
(22) Anmeldetag: 28.05.2014
(51) Int. Cl.: B01F 17/00, B28B 7/38

(54) **FORM- ODER SCHALUNGSTRENNMITTEL**
MOULDING OR FORMWORK SEPARATION AGENT
AGENT DE SÉPARATION DE COFFRAGE ET DE MOULAGE

(30) Priorität: 03.07.2013 DE 102013011269
(43) Veröffentlichungstag der Anmeldung: 07.01.2015
(73) Patentinhaber: Fels-Werke GmbH, 38640 Goslar (DE)
(72) Erfinder: Boenkendorf, Ulf Dr., 31188 Holle (DE); Stumpf, Thomas Dr., 38667 Bad Harzburg (DE); Freund, Joachim, 31234 Edemissen (DE)
(74) Vertreter: Solf, Alexander

(56) Entgegenhaltungen:
- EP-A1- 1 900 702
- WO-A1-92/02587
- DE-A1- 2 702 930
- RU-C1- 2 315 804
- US-A- 5 100 697

## Beschreibung

Die vorliegende Erfindung betrifft ein Form- oder Schalungstrennmittel, insbesondere als Bauhilfsmittel für die Herstellung von mineralisch gebundenen Bauteilen, bevorzugt für die Herstellung von Beton- oder Porenbetonbauteilen.

Form- oder Schalungstrennmittel oder auch Entschalungs- oder Entformungsmittel werden beispielsweise bei der Einschalung im Betonbau und für die Gussformen bei der Porenbetonherstellung verwendet. Sie sollen eine direkte Berührung der Schalung bzw. der Form mit der (Poren)betonoberfläche verhindern und dadurch beim Ausschalen bzw. Entnehmen des Formkörpers aus der Form eine problemlose Trennung ermöglichen. Dadurch werden Oberflächenschäden am Beton bzw. Porenbeton verhindert und Nacharbeiten vermieden. An die Form- bzw. Schalungstrennmittel werden dabei hohe Anforderungen gestellt. Eine Störung der Betonrandzone durch das Form- bzw. Schalungstrennmittel muss vermieden werden. Insbesondere darf die Hydratation nicht gestört werden. Auch soll das Abmehlen bzw. Absanden der Betonoberfläche vermieden werden. Form- bzw. Schalungstrennmittel sollen möglichst auch die Schalung vor übermäßigen Rückständen, Witterung sowie Auslaugen und Korrosion durch das alkalische Betonwasser schützen. Zudem sollen Form- bzw. Schalungstrennmittel möglichst für alle Schalungsarten geeignet sein. Je nach Schalungsart sind die Schalungen saugend (z.B. Holzschalungen) oder nicht saugend (z.B. glatte Schalungen aus Stahl, Gummi oder Kunststoff oder kunststoffbeschichtete und befilmte Sperrholztafeln). Die Verträglichkeit mit dem jeweiligen Material muss gegebenenfalls getestet werden. Bei der Verwendung bei der Porenbetonherstellung müssen die Form- bzw. Schalungstrennmittel temperaturbeständig sein.

Außerdem sollen Form- bzw. Schalungstrennmittel einen gleichmäßigen Auftrag mit optimaler Auftragsmenge gewährleisten. Generell führt eine geringere Auftragsmenge zu einer qualitativ besseren Betonoberfläche. Eine zu geringe Auftragsmenge führt allerdings zu einer unzureichenden Trennwirkung. Eine zu hohe Auftragsmenge führt dagegen zu Fleckenbildung, Bildung von Wasserlinsen und Haftungsproblemen von Beschichtungen. Bei einem unregelmäßigen Auftrag kann es zu unregelmäßigen hell/dunkel Bereichen und Flecken- und Schlierenbildung kommen. Für eine optimale Auftragsmenge und einen gleichmäßigen Auftrag ist, insbesondere bei vertikalen Schalungsoberflächen, eine ausreichend gute Benetzung der Oberfläche und eine gute Adhäsion des Trennmittels an den Schalungsoberflächen notwendig.

Im Beton- und Porenbetonbau werden verschiedene Form- bzw. Schalungstrennmitteltypen verwendet. Hauptsächlich werden Schal- bzw. Formöle, seltener auch Schalwachse verwendet. Als Schal- bzw. Formöle werden allgemein alle Öle bezeichnet, die als Trennmittel bei der Herstellung von Bauteilen, insbesondere Beton- oder Porenbetonbauteilen, mittels Schalungen oder Formen verwendet werden. In der Regel handelt es sich bei den Schalölen um Mineralöle bzw. mineralische Öle, seltener um Öle auf biogener Basis, z.B. Pflanzenöle. Die Mineralöle können unformuliert sein oder Additive und Lösungsmittel enthalten. Nachteilig an den Mineralölen ist vor allem deren schlechte Ökobilanz. Sie sind schwer biologisch abbaubar, was beispielsweise bei Trinkwasserbauten ungünstig ist. Die Mineralöle belasten außerdem das Grundwasser und die Atemluft. Lösungsmittelhaltige Mineralöle sind zwar sehr dünnflüssig und damit sparsam und gut aufzusprühen, bringen aber eine erhöhte Umweltbelastung mit sich und sind meist leicht entzündlich.

Aus diesem Grund werden zunehmend wässrige Trennmittelemulsionen aus Wasser und Schal- bzw. Formöl eingesetzt. Bei einer Emulsion handelt es sich um ein flüssiges, fein verteiltes Gemisch zweier normalerweise nicht mischbarer Flüssigkeiten ohne sichtbare Entmischung. Dabei liegt die eine Flüssigkeit in Form von fein verteilten Tröpfchen als disperse bzw. innere Phase in der anderen Phase (=kontinuierliche bzw. äußere bzw. kohärente Phase) vor. Bei einer Öl-in-Wasser-Emulsion (o/w-Emulsion) ist die Ölphase in der wässrigen Phase dispergiert, bei einer Wasser-in-Öl-Emulsion (o/w-Emulsion) ist es umgekehrt. Um die Emulsionen zu stabilisieren und die Koaleszenz der Tröpfchen zu verhindern, werden in der Regel Tenside als Emulgatoren zugesetzt, welche die Grenzflächenspannung an der Phasengrenzfläche deutlich senken. Große Tensidmoleküle erhöhen außerdem die Viskosität, was zu einer zusätzlichen Stabilisierung führt, da die die Bewegung der Tröpfchen und somit die Möglichkeit einer Koaleszenz erschwert wird.

Die bekannten Trennmittelemulsionen sind Öl-in-Wasser-Emulsionen. Sie sind, wie die lösungsmittelhaltigen, Mineralöle ebenfalls dünnflüssig und können daher fein versprüht und gut aufgetragen werden. Nach Verdunstung des Wassers bilden sie einen dünnen oberflächlichen Trennmittelfilm. Im Gegensatz zu reinen Mineralölen bilden sich bei Überdosierung weniger dunkle Verfärbungen. Aufgrund des geringeren Mineralölgehalts sind sie weniger umweltschädlich und kostengünstiger als reine Mineralöle. Die Trennmittelemulsionen sind zudem nicht brennbar und haben keinen unangenehmen Geruch. Allerdings enthalten die sich auf dem Markt befindlichen Schalölemulsionen zur Stabilisierung der Emulsionen organische Emulgatoren, die relativ teuer sind. Auch neigen die Schalölemulsionen zum Brechen, insbesondere bei höheren Temperaturen. Sie sind somit nicht lagerstabil. Des Weiteren ist oft keine ausreichende Adhäsion zu den zu benetzenden Oberflächen vorhanden.

Die US 5,100 697 offenbart beispielsweise eine Öl-in-Wasser-Emulsion als Formtrennmittel für die Herstellung von Betonbauteilen. Die Ol-in-Wasser-Emulsion weist sowohl einen nicht-ionischen als auch einen anionischen Emulgator auf.

Grundsätzlich ist es auch bekannt, Emulsionen mittels Feststoffen zu stabilisieren. Derartige Emulsionen werden als feststoffstabilisierte Emulsionen bzw. Pickering-Emulsionen bezeichnet. Die feinverteilten Feststoffe bilden einen stabilen, mechanisch ausreichend widerstandfähigen Film aus feinverteiltem Feststoff um die dispergierten Tröpfchen. Voraussetzung ist, dass der Feststoff von der Öl- und der Wasserphase benetzt wird, jedoch zu beiden Phasen eine unterschiedliche Affinität besitzt, was sich im Kontaktwinkel bzw. Benetzungswinkel θ zeigt. Hat der Feststoff eine höhere Affinität zur Wasserphase, ergibt sich ein Benetzungswinkel θ unter 90°, und es werden o/w-Emulsionen stabilisiert. Benetzungswinkel θ über 90° sind dagegen für eher lipophile Feststoffe charakteristisch, die bevorzugt w/o-Emulsionen stabilisieren. Feststoffstabilisierte Emulsionen werden von der Lagertemperatur, dem pH-Wert und dem Elektrolytgehalt der Wasserphase weniger beeinträchtigt als herkömmliche Emulsionen.

Die WO 2006/018112 A1 befasst sich mit der Rheologie-Steuerung einer Pickering-Emulsion vom Typ Öl-in-Wasser durch Elektrolyte. Als stabilisierenden Feststoff enthält die Emulsion pyrogene Kieselsäure. Als Elektrolyt kann ein Alkali- oder Erdalkalisalz, z.B. ein Natrium- oder Calciumsalz, insbesondere CaCl₂, verwendet werden. Die Emulsion kann in einem Hydrophobierungsmittel, Haftvermittler oder Trennmittel enthalten sein.

Die RU 2315804 C1 offenbart eine Trennemulsion, enthaltend Öl, Wasser und mit Fettsäure hydrophobierte Kreide.

Aus der EP 1 900 702 A1 geht ein Formtrennmittel für die Herstellung von Betonbauteilen hervor. Das Formtrennmittel weist eine wässrige Emulsion eines Öls mit organischen Emulgatoren und kolloidalem Siliziumdioxid auf.

Die DE 27 02 930 A1 offenbart ein Trennmittel für Formen zur Herstellung von Formteilen aus Polyurethan-Kunstharzen, das eine fettsaure Salze aufweisende Seifenemulsion bzw. -lösung enthält. Als Zuschlagstoff kann unter anderem Kreide enthalten sein.

Aufgabe der vorliegenden Erfindung ist die Bereitstellung eines kostengünstigen Form- bzw. Schalungstrennmittels, insbesondere als Bauhilfsmittel für die Herstellung von mineralisch gebundenen Bauteilen, bevorzugt für die Herstellung von Beton- oder Porenbetonbauteilen, welches eine gute Trennwirkung hat, umweltverträglich ist, gut aufzutragen ist und eine qualitativ hochwertige Bauteiloberfläche gewährleistet. Zudem soll das Form- bzw. Schalungstrennmittel lagerstabil sein.

Diese Aufgaben werden durch die Merkmale von Anspruch 1 gelöst. Vorteilhafte Weiterbildungen der Erfindung sind in den sich anschließenden Unteransprüchen gekennzeichnet.

Im Folgenden wird die Erfindung anhand einer Zeichnung näher erläutert. Es zeigen:
- Figur 1:: Eine REM-Aufnahme einer gefrorenen, erfindungsgemäßen, mittels gefälltem Calciumcarbonat stabilisierten, Schalungs- oder Formtrennmittelemulsion vom Typ Öl-in-Wasser
- Figur 2:: Eine weitere REM-Aufnahme der Schalungs- oder Formtrennmittelemulsion gemäß Fig. 1 mit stärkerer Vergrößerung

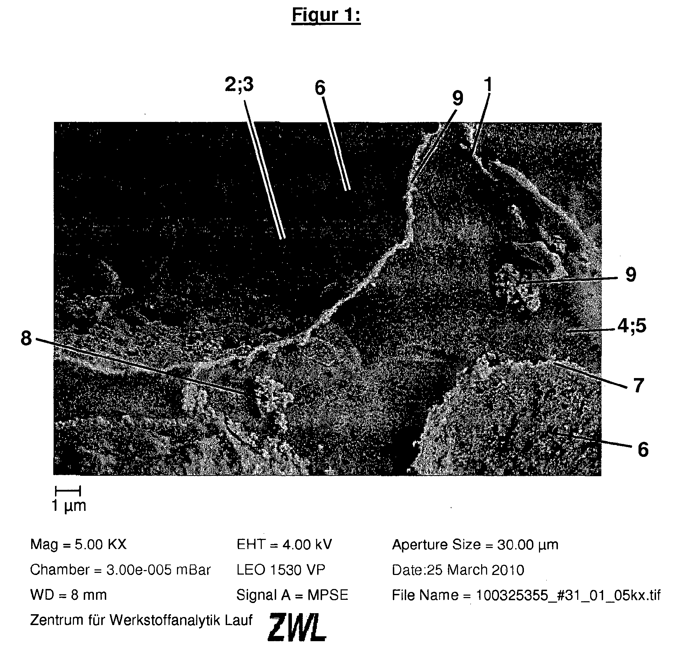

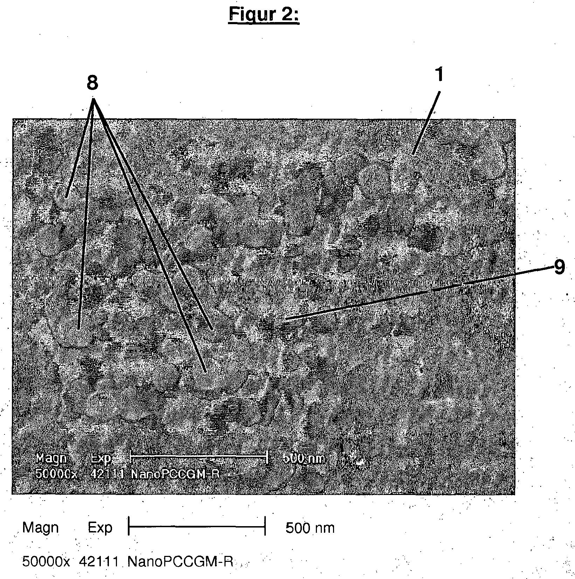

Erfindungsgemäß handelt es sich bei dem Schalungs- oder Formtrennmittel um eine feststoffstabilsierte Schalungs- oder Formtrennmittelemulsion 1 vom Typ Öl-in-Wasser oder Wasser-in-Öl, die als Feststoff-Emulgator gefälltes Calciumcarbonat (PCC) und/oder gefälltes Calciummagnesiumcarbonat enthält, welches an der Grenzfläche Öl-Wasser angeordnet ist und die Schalungs- oder Formtrennmittelemulsion 1 stabilisiert. Die Schalungs- oder Formtrennmittelemulsion 1 ist vorzugsweise vom Typ Öl-in-Wasser (Fig. 1 und 2) und weist somit eine Ölphase 2 als innere Phase 3 und eine Wasserphase 4 als äußere Phase 5 auf. Die Ölphase 2 ist in Form von vielen kleinen Öltröpfchen 6 in der Wasserphase 4 fein dispergiert. Die einzelnen Öltröpfchen 6 weisen an ihrer Oberfläche zudem eine Schicht bzw. Hülle bzw. Umhüllung 7 aus einzelnen, insbesondere zweidimensional, miteinander agglomerierten Carbonatpartikeln 8 aus gefälltem Calciumcarbonat (PCC) und/oder gefälltem Calciummagnesiumcarbonat auf, welche die Öltröpfchen 6 gegen Koaleszenz stabilisiert. Die Carbonatpartikel 8 sind also an der Grenzfläche Öl-Wasser angeordnet. Die Carbonatpartikel 8 bilden also Agglomerate 9. Unter Agglomeraten versteht man eine Ansammlung von schwach miteinander verbundenen Partikeln, Aggregaten oder einer Kombination derselben.

Bei dem die Ölphase 2 bildenden Öl handelt es sich um an sich bekanntes Schalöl bzw. Formöl, insbesondere um, bevorzugt unformuliertes, Mineralöl oder biogenes Öl (Pflanzenöl) oder Mischungen daraus.

Bei PCC (precipitated calcium carbonate) handelt es sich um synthetisches bzw. synthetisch hergestelltes Calciumcarbonat (CaCO₃). PCC wird auch als gefälltes bzw. ausgefälltes Calciumcarbonat bezeichnet. Im Unterschied dazu handelt es sich bei GCC (ground calcium carbonate) um gemahlenes Calciumcarbonat natürlichen Ursprungs. Die Herstellung von PCC erfolgt durch Reaktion von Kohlendioxid mit Kalkmilch. Die Kalkmilch wird entweder durch Löschen von Branntkalk oder durch Dispergieren von Calciumhydroxid in Wasser hergestellt. Je nach Prozessführung können fünf unterschiedliche Modifikationen hergestellt werden. Hauptsächlich wird die skalenoedrische (nadelförmige) Kristallform von Calcit gezüchtet. Die rhomboedrische Modifkation von Calcit wird vor allem als Beschichtungsmaterial oder Füllstoff für Papier verwendet. Amorphes PCC kann zwar hergestellt werden, hat aber keine technische Relevanz. Des Weiteren kann PCC in den Modifikationen Aragonit und die Vaterit (selten) hergestellt werden. Erfindungsgemäß wird vorzugsweise calcitisches und/oder aragonitisches PCC verwendet.

Gefälltes Calciummagnesiumcarbonat ((Ca,Mg)CO₃) wird hergestellt durch Einleiten von CO2-haltigem Gas in eine Suspension, die gelöschten Dolomit enthält.

Dabei wurde im Rahmen der Erfindung gefunden, dass die Schichtdicke bzw. die Schichtstärke der stabilisierenden Schicht 7 aus Carbonatpartikeln 8 eine entscheidende Rolle spielt für eine gute Stabilisierung. Je größer die Schichtdicke ist, desto stabiler ist die Emulsion 1. Allerdings ist der Bedarf an dem gefälltem Carbonat auch höher. Vorzugsweise beträgt die Schichtdicke 0,1 bis 0,8 µm, bevorzugt 0,2 bis 0,6 µm. Die Schichtdicke wird durch die Schichtstärke, also die Anzahl der Lagen der Carbonatpartikel 8 bestimmt. Vorzugsweise weist die stabilisierende Schicht 7 1 bis 6, bevorzugt 2 bis 5 Lagen übereinander angeordneter Carbonatpartikel 8 auf. Je größer die Schichtdicke ist, desto höher sind auch die Viskosität und die Fließgrenze der erfindungsgemäßen Schalungs- oder Formtrennmittelemulsion 1. Je höher die Viskosität und die Fließgrenze sind, desto besser ist auch die Adhäsion der erfindungsgemäßen Schalungs- oder Formtrennmittelemulsion 1 an der Schalung bzw. Form, insbesondere an vertikalen Flächen.

Im Rahmen der Erfindung wurde dabei heraus gefunden, dass die Anzahl der Lagen an Carbonatpartikeln 8 durch das Zetapotential des gefällten Carbonats gesteuert bzw. eingestellt werden kann. Je höher das Zetapotential ist, desto dünner ist die Schicht 7. Bevorzugt liegt das Zetapotential des gefällten Carbonats bei 10 bis 50 mV, insbesondere bei 30 bis 45 mV. Die Bestimmung des Zetapotential erfolgt durch ein elektroakustisches Messverfahren, verwendet wird Zeta Probe der Fa. Colloidal Dynamics. Das gewünschte Zetapotential des gefällten Carbonats kann dabei beispielsweise durch den Zusatz eines Dispergierhilfsmittels zur Wasserphase 4 eingestellt werden. Dispergierhilfsmittel sind Additive, die das Dispergieren, also die optimale Durchmischung von mindestens zwei, eigentlich nicht mischbaren Phasen bzw. Substanzen ermöglichen oder stabilisieren. Vorzugsweise handelt es sich bei dem Dispergierhilfsmittel um ein Natrium- oder Amminiumsalz einer Polycarbonsäure, bevorzugt um Tetranatriumdiphosphat. Die Dosierung des Dispergierhilfsmittels liegt vorzugsweise bei ≤ 1,5 g/l, bevorzugt ≤ 1,0 g/l bezogen auf die Schalungs- oder Formtrennmittelemulsion 1. Das Dispergierhilfsmittel verbessert zudem die rheologischen Eigenschaften der erfindungsgemäßen Schalungs- oder Formtrennmittelemulsion 1.

Des Weiteren wurde erfindungsgemäß heraus gefunden, dass die Kornform der Carbonatpartikel 8 für die Stabilisierung eine Rolle spielt. Vorzugsweise weisen die Carbonatpartikel 8 eine kompakte Kornform, insbesondere eine kubische oder runde Kornform auf. Vorteil der kompakten Kornform ist eine gleichmäßige Ausrichtung der Partikel ohne jegliche Vorzugsrichtung. Die Beurteilung der Kornform kann beispielsweise mittels Rasterelektronenmikroskopie in Zusammenhang mit bekannten granulometrischen Kriterien wie dem Längen/Breiten-Verhältnis erfolgen. Vorzugsweise beträgt das Längen/Breiten-Verhältnis < 3, bevorzugt < 2.

Außerdem handelt es sich bei den Carbonatpartikeln 8 um Nanopartikel mit einer Korngröße ≤ 500 nm, bevorzugt ≤ 200 nm, insbesondere ≤ 120 nm, bestimmt mittels Rasterelektronenmikroskopie. Das Kornband der Carbonatpartikel 8 liegt vorzugsweise bei 50-500 nm, bevorzugt 80-200 nm, insbesondere 80-120 nm. Dabei wird die Stabilität der Emulsion durch feinere Partikel signifikant verbessert.

Die Carbonatpartikel 8 können auch eine, insbesondere hydrophobierende, Oberflächenbeschichtung, wie z.B. mit Stearinsäure aufweisen. Mittels der Oberflächenbeschichtung kann der Kontaktwinkel bzw. Benetzungswinkel θ eingestellt werden. Dieser liegt vorzugsweise bei Werten von 70 bis 140°. Wie oben beschrieben handelt es sich je nach Benetzungswinkel θ bei der erfindungsgemäßen Schalungs- oder Formtrennmittelemulsion 1 um eine Öl-in-Wasser oder Wasser-in-Öl-Emulsion.

Um eine ausreichende Stabilisierung durch das gefällte Carbonat zu gewährleisten enthält die erfindungsgemäße Schalungs- oder Formtrennmittelemulsion 1 zudem vorzugsweise 2-6 Gew.%, bevorzugt 3-5 Gew.% gefälltes Carbonat (Calcium- und/oder Calciummagnesiumcarbonat). Des Weiteren weist die erfindungsgemäße Schalungs- oder Formtrennmittelemulsion 1 bevorzugt nicht noch zusätzlich organische Emulgatoren (Tenside) auf. Vorzugsweise weist die erfindungsgemäße Schalungs- oder Formtrennmittelemulsion 1 folgende Zusammensetzung auf:

| | | **bevorzugt** |
|---|---|---|
| | **[Gew.%]** | **[Gew.%]** |
| **Wasser** | 20 bis 80 | 50 bis 70 |
| **Öl** | 17 bis 77 | ≥ 25 |
| Carbonat insgesamt (Gefälltes Calcium- und/oder gefälltes Calciummagnesiumcarbonat) | 2 bis 7 | 3 bis 5 |
| Weitere Bestandteile (z.B. Biozide) | ≤ 1 | |

Die Herstellung der erfindungsgemäßen Schalungs- oder Formtrennmittelemulsion 1 erfolgt durch mechanische Rühr- oder Mischgeräte, d.h. marktübliche Dispergiergeräte. Ein vorheriges Aufschließen der Carbonatpartikel hat sich zumindest im Labormaßstab bewährt. Bevorzugt wurden PCC-Slurries verwendet, also wässrige Carbonat-Suspensionen mit einem Trockensubtanz-Anteil von 30-50 Gew. %.

Im Rahmen der Erfindung liegt es zudem auch, aus der erfindungsgemäßen Schalungs- oder Formtrennmittelemulsion 1, eine pulverförmige Trockenemulsion herzustellen. Die Trockenemulsion wird durch Trocknen der erfindungsgemäßen Schalungs- oder Formtrennmittelemulsion 1 erhalten und kann bei Bedarf, z.B. auf der Baustelle, jederzeit mittels Wasser redispergiert werden.

Bei der erfindungsgemäßen Schalungs- oder Formtrennmittelemulsion 1 ist von Vorteil, dass sie im Gegensatz zu den bekannten Schalungs- oder Formtrennmittelemulsionen viel stabiler ist. Das heißt, die erfindungsgemäße Schalungs- oder Formtrennmittelemulsion bricht auch nach sehr langer Lagerungszeit nicht. Aus diesem Grund kann sie problemlos vorgemischt und lange gelagert werden. Ein aufwendiges Anmischen auf der Baustelle entfällt. Außerdem ist die erfindungsgemäße Schalungs- oder Formtrennmittelemulsion 1 auch im alkalischen Betonwasser stabil.

Zudem wirkt das gefällte Carbonat überraschenderweise nicht nur als Stabilisator sondern verbessert auch die Trennwirkung. Denn sowohl das gefällte Calciumcarbonat als auch das gefällte Calciummagnesiumcarbonat sind chemisch inert und reagieren somit nicht mit den in der Betonmischung enthaltenen Bestandteilen. Das Carbonat wirkt somit als in der Schalungs- oder Formtrennmittelemulsion enthaltenes, pulverförmiges Trennmittel bzw. Trennpulver und unterstützt dadurch die trennende Wirkung des Schal- bzw. Formöls. Außerdem beeinflusst es die Hydratation nicht. Zudem ist es unkritisch, wenn ein Teil des Carbonats nach dem Entschalen auf der Betonoberfläche zurück bleibt und oberflächlich eingebunden wird, da es sich um Stoffe handelt, die ohnehin im Beton enthalten sein können. Überraschenderweise verbessern die sehr feinen Carbonatpartikel 8 aufgrund ihrer geringen Korngröße das Oberflächenbild des Bauteils sogar. Es werden sehr glatte, helle Oberflächen erhalten. Im Gegensatz dazu sind organische Bestandteile in mineralisch gebundenen Bauteilen, insbesondere in Porenbetonbauteilen, unerwünscht. Hier müssen vorgeschriebene Grenzwerte eingehalten werden. Dies ist ein weiterer Vorteil der erfindungsgemäßen Schalungs- oder Formtrennmittelemulsion 1 gegenüber den bekannten Emulsionen mit organischen Emulgatoren. Außerdem sind Calciumcarbonat und Calciummagnesiumcarbonat im Gegensatz zu den organischen Emulgatoren umweltverträglich.

Vorteilhaft ist zudem, dass PCC und gefälltes Calciummagnesiumcarbonat in sehr engen und gleichmäßigen Kornverteilungen sowie hohen Reinheiten und hohem Weißgrad hergestellt werden können. Über die Kornverteilung der Carbonatpartikel können die Eigenschaften der erfindungsgemäßen Schalungs- oder Formtrennmittelemulsion sehr genau eingestellt werden und einfach variiert werden. Im Folgenden werden bevorzugte Reinheitsgrade angegeben:

**Tabelle 1: Bevorzugte Zusammensetzungen von gefälltem Calciumcarbonat**

| | | **insbesondere** |
|---|---|---|
| | **[Gew.%]** | **[Gew.%]** |
| **CaCO₃** | ≥ 98 | ≥ 99 |
| **Fe₂O₃** | ≤ 0,12 | ≤ 0,08 |
| **Mn₂O₃** | ≤ 0,03 | ≤ 0,01 |

**Tabelle 2: Bevorzugte Zusammensetzungen von gefälltem Calciummagnesiumcarbonat**

| | | **bevorzugt** |
|---|---|---|
| | **[Gew.%**] | **[Gew.%**] |
| **(Ca,Mg)CO₃** | ≥ 97 | ≥ 99 |
| **Fe₂O₃** | ≤ 0,15 | ≤ 0,10 |
| **Mn₂O₃** | ≤ 0,03 | ≤ 0,01 |

Die erfindungsgemäße Schalungs- oder Formtrennmittelemulsion 1 kann zudem einfach, z.B. durch Besprühen oder Bestreichen, auf die zu behandelnde Schalungs- oder Formenoberfläche gleichmäßig aufgetragen werden. Diesen Vorgang nennt man Eintrennen. Nach dem Trocken bleibt auf der Oberfläche ein Film aus Schal- oder Formöl und fein verteilten, pulverförmigen Carbonatpartikeln 8 als Trennfilm zurück. Es wurde dabei festgestellt, dass das erfindungsgemäße Schalungs- oder Formtrennmittelemulsion 1 auch an sehr glatten und insbesondere vertikalen Oberflächen außerordentlich gut haftet. Offenbar wird die Oberflächenspannung der erfindungsgemäßen Schalungs- oder Formtrennmittelemulsion 1 durch das Carbonat reduziert, woraus die hervorragende Adhäsion resultiert. Die Schalungs- oder Formtrennmittelemulsion 1 ist somit benetzend.

Überraschenderweise wurde auch festgestellt, dass die erfindungsgemäße Schalungs- oder Formtrennmittelemulsion 1 auch den teilweise hohen Temperaturen beim Treiben und Härten des Porenbetons stand hält.

Im Rahmen der Erfindung liegt es auch, die erfindungsgemäße Schalungs- oder Formtrennmittelemulsion 1 als Trennmittel in der Metallgussherstellung zu verwenden.

## Patentansprüche

1. Feststoffstabilisierte Schalungs- oder Formtrennmittelemulsion (1) vom Typ Öl-in-Wasser oder Wasser-in Öl, insbesondere als Bauhilfsmittel für die Herstellung von mineralisch gebundenen Bauteilen in Schalungen oder Formen, bevorzugt für die Herstellung von Beton- oder Porenbetonbauteilen, oder als Trennmittel in der Metallgussherstellung, aufweisend eine Wasserphase (4) und eine Ölphase (2) sowie einen Feststoff-Emulgator zur Stabilisierung der Emulsion,
**dadurch gekennzeichnet, dass**
die Schalungs- oder Formtrennmittelemulsion (1) als Feststoff-Emulgator Carbonatpartikel (8) aus gefälltem Calciumcarbonat (PCC) und/oder gefälltem Calciummagnesiumcarbonat enthält, welche an der Grenzfläche Öl-Wasser angeordnet sind, wobei
die Schalungs- oder Formtrennmittelemulsion (1) eine äußere Phase (5) und eine darin in Form von Tröpfchen (6) dispergierte innere Phase (3) aufweist, wobei um die Tröpfchen (6) herum eine stabilisierende Schicht (7) aus den agglomerierten Carbonatpartikeln (8) vorhanden ist.

2. Schalungs- oder Formtrennmittelemulsion (1) nach Anspruch 1,
**dadurch gekennzeichnet, dass**
die Ölphase (2), bevorzugt unformuliertes, Mineralöl oder biogenes Öl oder Mischungen daraus aufweist.

3. Schalungs- oder Formtrennmittelemulsion (1) nach Anspruch 1 oder 2,
**dadurch gekennzeichnet, dass**
die Schichtdicke der stabilisierenden Schicht (7) 0,1 bis 0,8 µm, bevorzugt 0,2 bis 0,6 µm beträgt.

4. Schalungs- oder Formtrennmittelemulsion (1) nach einem der Ansprüche 1 bis 3,
**dadurch gekennzeichnet, dass**
die stabilisierende Schicht (5) 1 bis 6, bevorzugt 2 bis 5 übereinander angeordnete Lagen aus Carbonatpartikeln (8) aufweist.

5. Schalungs- oder Formtrennmittelemulsion (1) nach einem der vorhergehenden Ansprüche,
**dadurch gekennzeichnet, dass**
das gefällte Calciumcarbonat und/oder Calciummagnesiumcarbonat ein Zetapotential von 10 bis 50 mV, insbesondere von 30 bis 45 mV aufweist.

6. Schalungs- oder Formtrennmittelemulsion (1) nach einem der vorhergehenden Ansprüche,
**dadurch gekennzeichnet, dass**
die Carbonatpartikel (8) aus gefälltem Calciumcarbonat (PCC) und/oder gefälltem Calciummagnesiumcarbonat eine kompakte Kornform, insbesondere eine kubische oder runde Kornform, aufweisen.

7. Schalungs- oder Formtrennmittelemulsion (1) nach einem der vorhergehenden Ansprüche,
**dadurch gekennzeichnet, dass**
das Kornband der Carbonatpartikel (8) 50-500 nm, bevorzugt 80-200 nm, insbesondere 80-120 nm beträgt.

8. Schalungs- oder Formtrennmittelemulsion (1) nach einem der vorhergehenden Ansprüche,
**dadurch gekennzeichnet, dass**
die Schalungs- oder Formtrennmittelemulsion (1) insgesamt 2-7 Gew.%, bevorzugt 3-5 Gew.% Carbonat in Form von gefälltem Calciumcarbonat (PCC) und/oder gefälltem Calciummagnesiumcarbonat aufweist.

9. Schalungs- oder Formtrennmittelemulsion (1) nach einem der vorhergehenden Ansprüche,
**dadurch gekennzeichnet, dass**
die Schalungs- oder Formtrennmittelemulsion (1) folgende Zusammensetzung aufweist:
| | | **bevorzugt** |
|---|---|---|
| | **[Gew.%**] | **[Gew.%**] |
| **Wasser** | 20 bis 80 | 50 bis 70 |
| **Öl** | 17 bis 77 | ≥ 25 |
| **Carbonat (Gefälltes Calcium- und/oder gefälltes Calcium- magnesiumcarbonat)** | 2 bis 7 | 3 bis 5 |
| **Weitere Bestandteile (z.B. Biozide)** | ≤ 1 | |

10. Schalungs- oder Formtrennmittelemulsion (1) nach einem der vorhergehenden Ansprüche,
**dadurch gekennzeichnet, dass**
die Schalungs- oder Formtrennmittelemulsion (1) keine organischen Tenside aufweist.

11. Pulverförmige Trockenemulsion, hergestellt durch Trocknen der Schalungs- oder Formtrennmittelemulsion (1) gemäß einem der vorhergehenden Ansprüche.

12. Verwendung einer Schalungs- oder Formtrennmittelemulsion (1) gemäß einem der vorhergehenden Ansprüche als Bauhilfsmittel bei der Herstellung von Beton- oder Porenbetonbauteilen zum Eintrennen von Schalungen oder Formen.

13. Verwendung einer Schalungs- oder Formtrennmittelemulsion (1) gemäß einem der Ansprüche 1 bis 11 als Trennmittel in der Metallgussherstellung.

## Claims

1. A solid-stabilised formwork- or mould-release agent emulsion (1) of the oil-in-water or water-in-oil type, in particular as a construction auxiliary agent for the production of mineral-bound components in formworks or moulds, preferably for the production of concrete components or autoclaved aerated concrete components, or as a release agent in the production of metal castings, comprising an aqueous phase (4) and an oil phase (2) as well as a solid emulsifier for stabilising the emulsion,
**characterised in that**
the formwork- or mould-release agent emulsion (1) contains as the solid emulsifier carbonate particles (8) comprising precipitated calcium carbonate (PCC) and/or precipitated calcium magnesium carbonate, which are arranged at the oil-water interface, wherein
the formwork- or mould-release agent emulsion (1) comprises an external phase (5) and an internal phase (3) dispersed therein in the form of droplets (6), wherein a stabilising film (7) of the agglomerated carbonate particles (8) is present around the droplets (6).

2. The formwork- or mould-release agent emulsion (1) according to claim 1,
**characterised in that**
the oil phase (2) comprises preferably unformulated mineral oil or biogenic oil or mixtures thereof.

3. The formwork- or mould-release agent emulsion (1) according to claim 1 or 2,
**characterised in that**
the film thickness of the stabilising film (7) is 0.1 to 0.8 µm, preferably 0.2 to 0.6 µm.

4. The formwork- or mould-release agent emulsion (1) according to one of claims 1 to 3,
**characterised in that**
the stabilising film (5) comprises 1 to 6, preferably 2 to 5 layers of carbonate particles (8) arranged one on top of the other.

5. The formwork- or mould-release agent emulsion (1) according to one of the preceding claims,
**characterised in that**
the precipitated calcium carbonate and/or calcium magnesium carbonate has a zeta potential of 10 to 50 mV, in particular of 30 to 45 mV.

6. The formwork- or mould-release agent emulsion (1) according to one of the preceding claims,
**characterised in that**
the carbonate particles (8) comprising precipitated calcium carbonate (PCC) and/or precipitated calcium magnesium carbonate have a compact particle shape, in particular a cubic or round particle shape.

7. The formwork- or mould-release agent emulsion (1) according to one of the preceding claims,
**characterised in that**
the particle size range of the carbonate particles (8) is 50 - 500 nm, preferably 80 - 200 nm, in particular 80 - 120 nm.

8. The formwork- or mould-release agent emulsion (1) according to one of the preceding claims,
**characterised in that**
the formwork- or mould-release agent emulsion (1) comprises a total of 2 - 7 wt.%, preferably 3 - 5 wt.% carbonate in the form of precipitated calcium carbonate (PCC) and/or precipitated calcium magnesium carbonate.

9. The formwork- or mould-release agent emulsion (1) according to one of the preceding claims,
**characterised in that**
the formwork- or mould-release agent emulsion (1) has the following composition:
| | | **Preferably** |
|---|---|---|
| | **[wt.%]** | **[wt.%]** |
| **Water** | 20 to 80 | 50 to 70 |
| **Oil** | 17 to 77 | ≥ 25 |
| **Carbonate (precipitated calcium carbonate and/or precipitated calcium magnesium carbonate)** | 2 to 7 | 3 to 5 |
| **Other constituents (e.g. biocides)** | ≤ 1 | |

10. The formwork- or mould-release agent emulsion (1) according to one of the preceding claims,
**characterised in that**
the formwork- or mould-release agent emulsion (1) comprises no organic surfactants.

11. A powdered dry emulsion, produced by drying the formwork- or mould-release agent emulsion (1) according to one of the preceding claims.

12. Use of a formwork- or mould-release agent emulsion (1) according to one of the preceding claims as a construction auxiliary agent in the production of concrete components or autoclaved aerated concrete components for application to formworks or moulds for release purposes.

13. Use of a formwork- or mould-release agent emulsion (1) according to one of claims 1 to 11 as a release agent in the production of metal castings.

## Revendications

1. Emulsion d'agent de séparation de coffrage et de moulage (1), dont les matières solides sont stabilisées, du type huile dans l'eau ou eau dans l'huile, en particulier comme agent auxiliaire de construction pour la fabrication de composants liés par voie minérale dans des coffrages ou des moules, de préférence pour la fabrication de composants de béton ou de béton cellulaire, ou comme agent de séparation dans la fabrication de pièces coulées en métal, présentant une phase aqueuse (4) et une phase huileuse (2) ainsi qu'un émulsifiant solide pour la stabilisation de l'émulsion,
**caractérisée en ce que**
l'émulsion d'agent de séparation de coffrage et de moulage (1) contient, comme émulsifiant solide, des particules de carbonate (8) de carbonate de calcium précipité (PCC) et/ou carbonate de magnésium et de calcium précipité qui sont agencées sur la surface limite huile-eau, dans laquelle
l'émulsion d'agent de séparation de coffrage et de moulage (1) présente une phase extérieure (5) et une phase intérieure (3) dispersée dedans sous la forme de gouttelettes (6), une couche (7) stabilisatrice composée des particules de carbonate (8) agglomérées étant présente autour des gouttelettes (6).

2. Emulsion d'agent de séparation de coffrage et de moulage (1) selon la revendication 1,
**caractérisée en ce que**
la phase huileuse (2) présente de l'huile minérale de préférence non formulée ou de l'huile biogène ou des mélanges de celles-ci.

3. Emulsion d'agent de séparation de coffrage et de moulage (1) selon la revendication 1 ou 2,
**caractérisée en ce que**
l'épaisseur de couche de la couche stabilisatrice (7) est comprise entre 0,1 et 0,8 µm, de préférence entre 0,2 et 0,6 µm.

4. Emulsion d'agent de séparation de coffrage et de moulage (1) selon l'une quelconque des revendications 1 à 3,
**caractérisée en ce que**
la couche stabilisatrice (5) présente 1 à 6, de préférence 2 à 5 couches agencées les unes sur les autres de particules de carbonate (8).

5. Emulsion d'agent de séparation de coffrage et de moulage (1) selon l'une quelconque des revendications précédentes,
**caractérisée en ce que**
le carbonate de calcium précipité et/ou le carbonate de magnésium et de calcium présente un potentiel Zêta de 10 à 50 mV, en particulier de 30 à 45 mV.

6. Emulsion d'agent de séparation de coffrage et de moulage (1) selon l'une quelconque des revendications précédentes,
**caractérisée en ce que**
les particules de carbonate (8) de carbonate de calcium précipité (PCC) et/ou de carbonate de magnésium et de calcium précipité présentent une forme de grain compacte, en particulier une forme de grain cubique ou ronde.

7. Emulsion d'agent de séparation de coffrage et de moulage (1) selon l'une quelconque des revendications précédentes,
**caractérisée en ce que**
la bande de grain des particules de carbonate (8) est comprise entre 50 et 500 nm, de préférence entre 80 et 200 nm, en particulier entre 80 et 120 nm.

8. Emulsion d'agent de séparation de coffrage et de moulage (1) selon l'une quelconque des revendications précédentes,
**caractérisée en ce que**
l'émulsion d'agent de séparation de coffrage ou de moulage (1) présente dans l'ensemble 2 à 7 % en poids, de préférence 3 à 5 % en poids de carbonate sous la forme de carbonate de calcium précipité (PCC) et/ou de carbonate de magnésium et de calcium précipité.

9. Emulsion d'agent de séparation de coffrage et de moulage (1) selon l'une quelconque des revendications précédentes,
**caractérisée en ce que**
l'émulsion d'agent de séparation de coffrage et de moulage (1) présente la composition suivante :
| | | de préférence |
|---|---|---|
| | [% en poids] | [% en poids] |
| Eau | 20 à 80 | 50 à 70 |
| Huile | 17 à 77 | ≥ 25 |
| Carbonate (carbonate de calcium précipité et/ou carbonate de magnésium et de calcium précipité) | 2 à 7 | 3 à 5 |
| Autres constituants (par exemple biocides) | ≤ 1 | |

10. Emulsion d'agent de séparation de coffrage et de moulage (1) selon l'une quelconque des revendications précédentes,
**caractérisée en ce que**
l'émulsion d'agent de séparation de coffrage ou de moulage (1) ne présente aucun tensioactif organique.

11. Emulsion sèche poudreuse fabriquée par séchage de l'émulsion d'agent de séparation de coffrage et de moulage (1) selon l'une quelconque des revendications précédentes.

12. Utilisation d'une émulsion d'agent de séparation de coffrage et de moulage (1) selon l'une quelconque des revendications précédentes comme agent auxiliaire de construction lors de la fabrication de composants de béton ou de béton cellulaire pour la séparation de coffrages ou de moules.

13. Utilisation d'une émulsion d'agent de séparation de coffrage et de moulage (1) selon l'une quelconque des revendications 1 à 11 comme agent de séparation dans la fabrication de pièces coulées en métal.
